Europäisches Patentamt

(19) European Patent Office

Office européen des brevets

(11) Veröffentlichungsnummer: **0 007 626**
**B1**

# (12) EUROPÄISCHE PATENTSCHRIFT

(45) Veröffentlichungstag der Patentschrift:
25.08.82

(21) Anmeldenummer: **79102649.5**

(22) Anmeldetag: **25.07.79**

(51) Int. Cl.³: **H 04 B 3/44,** H 04 B 9/00

(54) Schaltungsanordnung zur Fernspeisung von Zwischenstellen einer Einrichtung der Nachrichtenübertragungstechnik.

(30) Priorität: **27.07.78 DE 2833022**

(43) Veröffentlichungstag der Anmeldung:
**06.02.80 Patentblatt 80/3**

(45) Bekanntmachung des Hinweises auf die Patenterteilung:
**25.08.82 Patentblatt 82/34**

(84) Benannte Vertragsstaaten:
**BE DE FR GB IT NL**

(56) Entgegenhaltungen:
**DE-A-1 902 090**
**DE-B-1 267 267**
**DE-B-1 762 599**
**POST OFFICE ELECTRICAL ENGINEERS JOURNAL, Vol. 68, Nr. 3, Oktober 1975, London, GB, B. HALL et al.: »Further considerations of optical-fibre transmission systems«, Seiten 170 bis 174**
**THE POST OFFICE ELECTRICAL ENGINEERS' JOURNAL, Oct. 1973, pp. 135 bis 137**

(73) Patentinhaber: **SIEMENS AKTIENGESELLSCHAFT**
**Berlin und München, Postfach 22 02 61,**
**D-8000 München 22 (DE)**

(72) Erfinder: **Ziegler, Alfred, Dipl.-Ing., Laimer Platz 1,**
**D-8000 München 21 (DE)**

## Schaltungsanordnung zur Fernspeisung von Zwischenstellen einer Einrichtung der Nachrichtenübertragungstechnik

Die Erfindung bezieht sich auf eine Schaltungsanordnung zur Fernspeisung von Zwischenstellen einer Einrichtung der Nachrichtenübertragungstechnik, mittels Gleichstrom-Reihenspeisung, wobei in einem Fernspeisekreis eine Reihenschaltung von zwei in Speisestellen der Nachrichtenübertragungseinrichtung vorgesehenen, über ein Speiseadernpaar miteinander verbundenen Konstantstromquellen vorgesehen ist und wobei jede der beiden Konstantstromquellen derart bemessen ist, daß sie die ganze Übertragungsstrecke versorgen kann.

Eine derartige Schaltungsanordnung ist z. B. aus »The Post Office Electrical Engineers' Journal«, Vol. 66, Part 3, Oct. 1973, Seiten 135 bis 137, bekannt.

Bei der bekannten Schaltungsanordnung sind zum Zwecke des Berührungsschutzes an beiden Enden eines Fernspeisekreises Konstantstromquellen angeschlossen. Stimmen die beiden Konstantströme exakt überein und werden die beiden Adern des Speisekreises an irgendeiner beliebigen Stelle versehentlich über den Körperwiderstand einer Person miteinander verbunden, so führt eine solche fehlerhafte Verbindung dazu, daß an der Fehlerstelle die Spannung zusammenbricht und daß sich für die beiden Speisegeräte eine entsprechende Lastaufteilung einstellt. Die Anordnung hat den Zweck sicherzustellen, daß Personen, die die Speiseadern zufällig berühren, hierdurch nicht zu Schaden kommen können. Diese Funktion hat zur Voraussetzung, daß die von den Konstantstromquellen gelieferten Ströme möglichst gut übereinstimmen, da im Berührungsfall der Differenzstrom über die fehlerhafte Querverbindung fließt.

Aus der DE-PS 1 762 599 ist bereits eine Schaltung bekannt, die zum Schließen einer Fernspeiseschleife für reihengespeiste Unterstationen bei Streckenunterbrechungen dient. Dabei bestehen die unbesetzten Unterstationen jeweils aus je zwei parallel gespeisten Verstärkern für beide Richtungen. Zur Aufrechterhaltung der Speisung wenigstens in einem Teil des Übertragungssystems ist vorgesehen, daß in jeder Zwischenverstärkerstelle eine Relaisspule und die Verbraucherwiderstände der Verstärker in verschiedene Fernspeisestrompfade eingeschleift sind. Die Querverbindung mit dem Relaiskontakt ist über eine Weichenschaltung, bestehend aus je einer den Verbraucherwiderständen und der Relaisspule parallel geschalteten Reihenschaltung von wenigstens zwei Dioden hergestellt.

Durch diese Maßnahmen soll in Fernspeisesystemen mit gleichmäßiger Lastverteilung die für eine Fehlerortung erforderliche eindeutige Lage von Relaisspule und Querverbindung im Fernspeiseweg unabhängig davon erreicht werden, ob der Relaiszweig des Schaltzusatzes im einen oder anderen Fernspeisezweig angeordnet ist. Der Schaltzusatz ist ein Vierpol, der mit jeweils einem Klemmenpaar an den der Signalquelle zugewandten ersten und an den der Speisequelle abgewandten zweiten Teil der Fernspeiseschleife bzw. des Speiseadernpaares angeschlossen ist. Dadurch, daß die Relaisspule und damit der eine Längszweig des Vierpols von Zwischenverstärkerstelle zu Zwischenverstärkerstelle abwechselnd in den einen oder anderen Fernspeisestrompfad eingefügt ist und die Energieflußrichtung in der Fernspeiseschleife immer gleich ist, ergibt sich für den abwechselnd umgekehrt eingeschleiften Vierpol jeweils ein Wechsel der Energieflußrichtung.

In der genannten DE-PS 1 762 599 ist weiterhin eine Anordnung erwähnt, bei der zusätzlich zu einem in Energieflußrichtung der Speisung hinter den Zwischenverstärkern angeordneter Schaltzusatz mit Relaisspule und Querverbindung ein weiteres Relais mit zugehörigem Querzweig vor dem Verstärker angeordnet ist. In beiden Fällen soll die Möglichkeit geschaffen werden, bei einer einseitig gespeisten Fernspeiseschleife die Relaisspule des Schaltzusatzes zwecks gleichmäßiger Belastung der beiden Speiseadern abwechselnd in die eine oder andere Speiseader einzufügen.

Aufgabe der Erfindung ist es, eine Schaltungsanordnung der eingangs genannten Art, bei der sich fehlerhafte Verbindungen zwischen den Speiseadern weder in einer der beiden Speisestellen noch auf dem Speiseadernpaar störend auf die Energieversorgung der Zwischenstellen auswirken, so auszubilden, daß die Energieversorgung auch bei einer Unterbrechung an einer beliebigen Stelle des Fernspeisekreises weiter aufrechterhalten bleibt, so daß keine Unterbrechung der Nachrichtenübertragung eintritt.

Gemäß der Erfindung wird die Schaltungsanordnung zur Lösung dieser Aufgabe derart ausgebildet, daß in den Zwischenstellen jeweils ein Schaltzusatz vorgesehen ist, der sowohl auf Unterbrechungen des Speiseadernpaares auf Seiten der einen als auch auf Unterbrechungen des Speiseadernpaares auf Seiten der anderen Konstantstromquelle anspricht, und daß die Zwischenstellen mittels eines eigenen Speiseadernpaares gespeist sind, und daß der Schaltzusatz ein vom Fernspeisestrom durchflossenes Relais und eine im Querzweig liegende Reihenschaltung, bestehend aus einem Widerstand und einem Ruhekontakt des Relais enthält und daß die Querverbindung mit dem Relaiskontakt über eine Weichenschaltung, bestehend aus je einer dem Speiseeingang der Zwischenstelle und der Relaisspule parallel geschalteten Reihenschaltung von wenigstens zwei Dioden hergestellt ist.

Durch diese Maßnahmen ergibt sich der Vorteil, daß bei einer Unterbrechung der Fernspeiseschleife die Speiseadern jeweils selbsttätig in der Weise mit Hilfe eines Schaltzusatzes miteinander verbunden werden, daß der zugehörige Verstärker über die nicht unterbrochene Richtung weiter versorgt wird. Nach Beseitigung der Unterbrechung wird die Adernverbindung am Schaltzusatz selbsttätig wieder aufgehoben.

Vorteilhafte weitere Ausgestaltungen der Erfindung ergeben sich aus den Unteransprüchen.

Die Erfindung wird anhand der in den Figuren dargestellten Ausführungsbeispiele näher erläutert.

Die Erfindung wird anhand der in den Figuren dargestellten Ausführungsbeispiele näher erläutert. Es zeigt

Fig. 1 eine Schaltungsanordnung zur unterbrechungslosen Fernspeisung von Zwischenstellen einer Nachrichtenübertragungseinrichtung,

Fig. 2 den Potentialverlauf bei der in Fig. 1 gezeigten Schaltungsanordnung bei ungestörtem Betrieb bzw. Ausfall einer Speisestelle,

Fig. 3 den Potentialverlauf der in Fig. 1 gezeigten Schaltungsanordnung bei Kurzschluß oder Unterbrechung der Fernspeisestrecke und

Fig. 4 und 5 Schaltzusätze, d. h. Schaltungen zum Schließen der Fernspeiseschleife bei Streckenunterbrechung, und zwar Fig. 4 mit einem empfindlichen Relais und Fig. 5 mit einem weniger empfindlichen Relais.

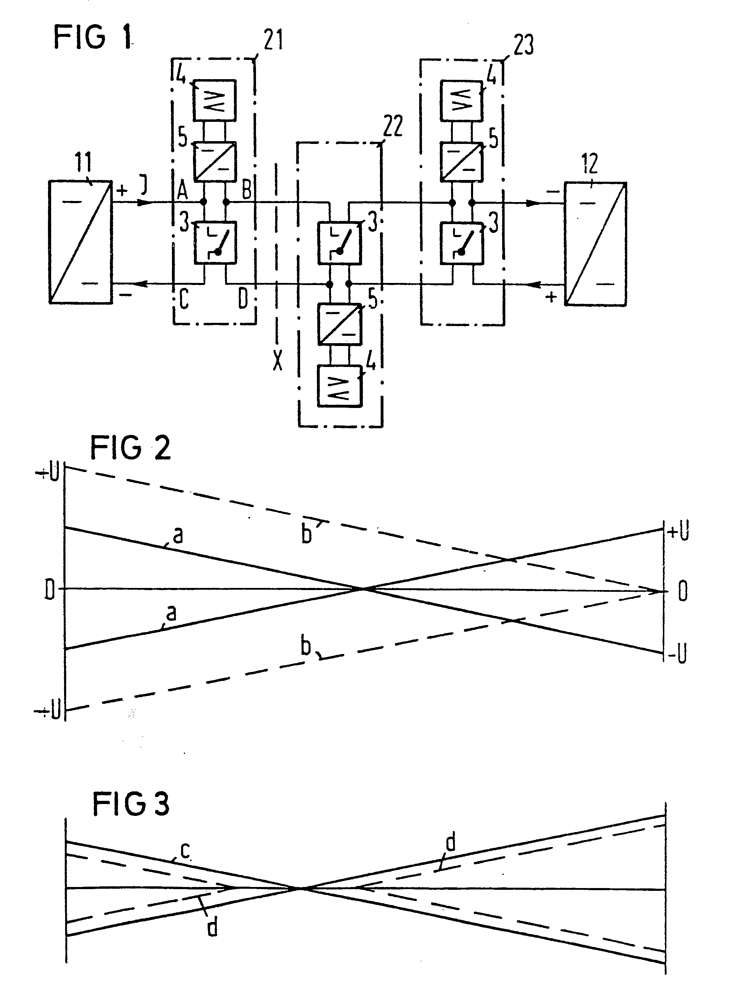

Fig. 1 zeigt eine Anordnung zur Fernspeisung von Zwischenstellen einer Einrichtung zur Nachrichtenübertragung, die insbesondere Zwischengeneratoren einer Lichtwellenleiter-Strecke sind.

Dabei läuft der Fernspeisekreis über Speiseadern, die zusätzlich zu den Lichtwellenleitern vorgesehen sind. Auch im Falle einer Nachrichtenübertragungsstrecke mit Koaxialleitungen, z. B. TF-Übertragungsstrecken, verläuft der Fernspeisekreis insbesondere über eigene Speiseadern im Beipack der Kabel. Dabei bleibt, sofern nur der Speisestromkreis unterbrochen ist, die Nachrichtenverbindung in vorteilhafter Weise weiter aufrechterhalten.

Die Zwischenstellen 21 . . . 23 der Nachrichtenübertragungseinrichtung werden mittels Reihenspeisung mit konstantem Gleichstrom I gespeist. In jeder Zwischenstelle 21 . . . 23, die eine Regenerator- oder Verstärkerstelle sein kann, ist ein Umrichter 5 zur Lieferung der Betriebsspannung für die Verbraucher vorgesehen, dessen Eingang vom Fernspeise-Gleichstrom I durchflossen ist. Der Umrichter 5 versorgt jeweils einen Leitungsverstärker 4, der je Übertragungsrichtung der Nachrichtenübertragungsstrecke einen Einzelverstärker enthält. Die beiden Einzelverstärker werden, was in der Figur nicht näher dargestellt ist, insbesondere parallel gespeist, so daß sich für die Schaltungsanordnung zur Fernspeisung eine Parallel-Reihenspeisung ergibt.

Die Umrichter 5 werden im Fernspeisekreis in Reihenschaltung betrieben. Die Eingänge der Umrichter 5 sind von Zwischenstelle zu Zwischenstelle alternierend in den einen und den anderen Fernspeise-Strompfad geschaltet, um eine gleichmäßige Lastverteilung zu erzielen. Sie können jedoch gegebenenfalls auch in ein und dieselbe Fernspeiseader bzw. ein und denselben Fernspeise-Strompfad eingefügt sein.

Das Fernspeise-Aderpaar ist an beiden Enden jeweils an ein Fernspeisegerät 11 bzw. 12 angeschlossen, so daß sich eine beidseitige Speisung mit gleichzeitig vorhandener Geräteredundanz ergibt. Dabei ist im Fernspeisekreis eine Reihenschaltung der beiden Fernspeisegeräte 11 und 12 wirksam. Jedes dieser beiden Fernspeisegeräte ist in der Lage, die ganze Fernspeisestrecke nach dem Prinzip der sogenannten »heißen Reserve« zu versorgen.

Ohne besondere Maßnahme stellt sich im ungestörten Betrieb die Lastaufteilung beliebig, nämlich entsprechend den unvermeidbaren Toleranzen der Fernspeisegeräte zufällig ein; dies ist für die Konstantstromlieferung ohne Bedeutung.

Fig. 2 zeigt den Potentialverlauf auf der Fernspeisestrecke. Das Geradenpaar a zeigt den Verlauf bei ungestörtem Betrieb und das Geradenpaar b für einen Ausfall des Fernspeisegerätes 12. Im Falle a ist die Lastaufteilung zwischen den beiden Fernspeisegeräten zufällig. Im Falle b liefert das Fernspeisegerät 11 die gesamte Leistung.

Bei Kurzschluß an einer Stelle X des Fernspeisekreises stellt sich der in Fig. 3, Geradenpaar c dargestellte Potentialverlauf auf der Fernspeisestrecke ein.

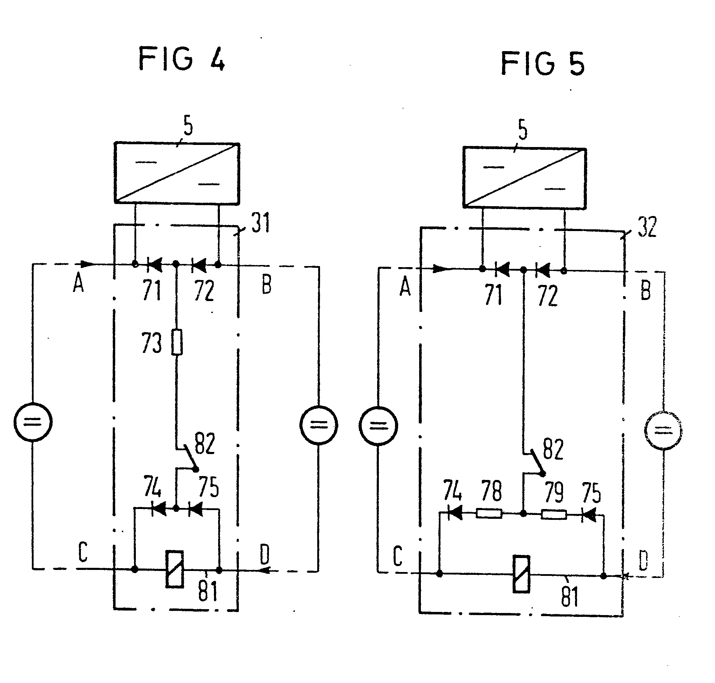

Ein unterbrechungsfreier Betrieb der Zwischenstellen auch bei einer Unterbrechung an einer Stelle X des Fernspeise-Aderpaares wird dadurch erreicht, daß in jeder Zwischenstelle ein Schaltzusatz 3 vorgesehen ist, der bei einer Unterbrechung einer oder beider Speiseadern den Fernspeisekreis vor der Unterbrechungsstelle X so schließt, daß die Umrichter 5 der Zwischenstellen weiter versorgt werden. Ein derartiger Schaltzusatz ist in den Fig. 4 und 5 näher erläutert. Den zugehörigen Potentialverlauf auf der Fernspeisestrecke zeigt Fig. 3 mit dem Geradenpaar d für den Fall einer Unterbrechung an der Stelle X.

Sobald eine Verbindung zwischen den Speiseadern auftritt, speist das Fernspeisegerät 11 bis zu dieser Stelle. Das Fernspeisegerät 12 speist ebenfalls bis zur Verbindungsstelle, so daß die gesamte Strecke weiterhin versorgt bleibt.

Um sowohl bei Kurzschluß als auch bei Unterbrechung auf ein Verstärkerfeld genau orten zu können, werden die Schaltzusätze, die im Unterbrechungsfall die Adern verbinden, so ausgebildet und bemessen, daß sie nur einen Spannungsabfall an der Verbindungsstelle aufweisen, der deutlich geringer ist als der Spannungsabfall eines Verstärkerfeldes.

In jeder Zwischenstelle ist ein Schaltzusatz 3 vorgesehen, der bei einer Unterbrechung der Fernspeiseschleife die beiden Speiseadern in der Weise verbindet, daß der zugehörige Zwischenverstärker über die nicht unterbrochene Richtung weiter versorgt und die unterbrochene Richtung dabei überwacht wird. Nach Beseitigung der Unterbrechung wird die Adernverbindung am Schaltzusatz selbsttätig wieder aufgehoben.

Fig. 4 zeigt den Aufbau dieses Schaltzusatzes bei Verwendung eines empfindlichen Relais 81.

Der Schaltzusatz 31 wird auf der einen Seite mit den Anschlüssen A und C, auf der anderen Seite mit den Anschlüssen B und D in den Fernspeisekreis eingeschaltet.

Die Anschlüsse A und B, an die der Umrichter 5 angeschlossen ist, sind über eine Serienschaltung aus den Dioden 71 und 72 verbunden. Zwischen den Anschlüssen C und D liegt das Relais 81, das durch die Serienschaltung der Dioden 74 und 75 überbrückt ist. Zwischen den Verbindungenpunkten der beiden Dioden 71, 72 bzw. 74, 75 liegt die Reihenschaltung des Widerstandes 73 mit dem Ruhekontakt 82 des Relais 81.

Tritt die Streckenunterbrechung in Richtung der Anschlüsse B, D auf, so wird der Umrichter 5 aus der Richtung der Anschlüsse A bis C weiterbetrieben. Der Speisestrom fließt dann vom Anschluß A kommend über den Eingang des Umrichters 5 (Diode 71 sperrt), Diode 72 und Querwiderstand 73 zum geschlossenen Relaiskontakt 82, und von dort über die Diode 74 und Anschluß C wieder zurück. Das Relais 81 überwacht die fehlerhafte Richtung der Anschlüsse B bis D.

Tritt die Streckenunterbrechung in Richtung der Anschlüsse A bis C auf, so werden die Umrichter 5 aus der Richtung der Anschlüsse B bis D weiter betrieben. Der Stromfluß verläuft dann vom Anschluß D über die Diode 75, den Kontakt 82, den Widerstand 73, die Diode 71, den Umrichter 5 um Anschluß B. Das Relais 81 überwacht nun die fehlerhafte Richtung der Anschlüsse A bis B.

Fig. 5 zeigt eine Abwandlung des in Fig. 4 dargestellten Schaltzusatzes bei Einsatz eines weniger empfindlichen Relais 81'. Der Schaltzusatz nach Fig. 5 unterscheidet sich von dem nach Fig. 6 außerdem dadurch, daß anstelle des durch eine direkte Verbindung ersetzten Widerstandes 73 in Serie zu den Dioden 74 und 75 jeweils ein Widerstand 78 bzw. 79 angeordnet ist.

Die Diodenbrücke 71, 72, 74, 75 des in Fig. 4 bzw. Fig. 5 gezeigten Schaltzusatzes ermöglicht in vorteilhafter Weise die gleiche Arbeitsweise unabhängig von der Speiserichtung mit nur einem Relais 81 bzw. 81'.

## Patentansprüche

1. Schaltungsanordnung zur Fernspeisung von Zwischenstellen einer Einrichtung der Nachrichtenübertragungstechnik, mittels Gleichstrom-Reihenspeisung, wobei in einem Fernspeisekreis eine Reihenschaltung von zwei in Speisestellen der Nachrichtenübertragungseinrichtung vorgesehenen, über ein Speiseadernpaar miteinander verbundenen Konstantstromquellen vorgesehen ist und wobei jede der beiden Konstantstromquellen derart bemessen ist, daß sie die ganze Übertragungsstrecke versorgen kann, dadurch gekennzeichnet, daß in den Zwischenstellen (21 ... 23) jeweils ein Schaltzusatz (3) vorgesehen ist, der sowohl auf Unterbrechungen des Speiseadernpaares auf Seiten der einen als auch auf Unterbrechungen des Speiseadernpaares auf Seiten der anderen Konstantstromquelle anspricht, und daß die Zwischenstellen mittels eines eigenen Speiseadernpaares gespeist sind, und daß der Schaltzusatz ein vom Fernspeisestrom durchflossenes Relais und eine im Querzweig liegende Reihenschaltung, bestehend aus einem Widerstand und einem Ruhekontakt des Relais enthält und daß die Querverbindung mit dem Relaiskontakt über eine Weichenschaltung, bestehend aus je einer dem Speiseeingang der Zwischenstelle und der Relaisspule parallel geschalteten Reihenschaltung von wenigstens zwei Dioden hergestellt ist.

2. Schaltungsanordnung nach Anspruch 1, dadurch gekennzeichnet, daß die Weichenschaltung aus je einem dem Speiseeingang der Zwischenstelle und der Relaisspule parallel geschalteten Paar gleichsinnig gepolter Dioden besteht, zwischen deren Schaltungsmittelpunkten der Querzweig angeordnet ist.

3. Schaltungsanordnung nach einem der Ansprüche 1 oder 2, dadurch gekennzeichnet, daß bei Verwendung von weniger empfindlichen Relais das zugehörige Diodenpaar mit zwei gleich großen, vorzugsweise dem erforderlichen Widerstand im Querzweig entsprechenden Widerständen in Serie geschaltet ist.

## Claims

1. A circuit arrangement for the remote supply of intermediate stations in a communications transmission system using direct current series supply, wherein a remote supply circuit contains a series connection of two constant current sources in supply points of the communications transmission system which are connected to one another by a pair of supply channels, and wherein each of the two constant current sources can feed the entire transmission path, characterised in that the intermediate stations (21 ... 23) are respectively provided with an additional switching unit (3) which responds both to interruptions of the pair of supply channels on the part of the one constant current source and to interruptions of the pair of supply channels on the part of the other constant current source, the intermediate stations being fed by means of a separate pair of supply channels, the additional switching unit comprising a relay which is traversed by the remote supply current and further comprising a shunt arm containing a series combination of a resistor and a rest contact of the relay, and the transverse connection to the relay contact being established by means of a separator circuit which consists of two series connections of at least two diodes which are respectively connected to the supply input of the intermediate station an to the relay coil.

2. A circuit arrangement as claimed in claim 1, characterised in that the separator circuit consists of two pairs of diodes poled in the same direction, which pairs are respectively connected in parallel to the supply input of the intermediate station and to the relay coil, and the shunt arm being arranged between the centre points of the diode pairs.

3. A circuit arrangement as claimed in one of claims 1 or 2, characterised in that relatively insensitive relays are used and the corresponding pair of diodes is switched in series with two commensurate resistors which preferably correspond to the requisite resistance in the shunt arm.

**Revendications**

1. Montage pour l'alimentation à distance de stations-relais d'une installation pour la transmission de communications, à l'aide d'une alimentation série en courant continu, du type dans lequel il est prévu un montage série de deux sources de courant constant reliées entre elles par une paire de fils d'alimentation, disposées dans des postes d'alimentation de l'installation pour la transmission de communications, et dans lequel chacune des deux sources de courant constant est dimensionnée de telle façon qu'elle peut alimenter la totalité de la voie de transmission, caractérisé par le fait que dans chacune des stations-relais est prévu un moyen de commutation supplémentaire (3) qui répond aussi bien à des interruptions de la paire de fils d'alimentation du côté de l'une des sources de courant constant qu'à des interruptions de la paire de fils d'alimentation du côté de l'autre source de courant constant, que les stations-relais sont alimentées à l'aide d'une paire de fils d'alimentation qui leur sont propres, que le moyen de commutation supplémentaire comporte un relais traversé par le courant d'alimentation à distance et un circuit série disposé dans la branche transversale et constitué par une résistance et par un contact de relais de repos du relais, et que la liaison transversale est établie avec le contact de relais par l'intermédiaire d'un circuit d'aiguillage constitué respectivement par un montage série d'au moins deux diodes montées en parallèle sur l'entrée de l'alimentation de la station-relais et sur la bobine de relais.

2. Montage selon la revendication 1, caractérisé par le fait que chaque circuit d'aiguillage est constitué par une paire de diodes branchées avec la polarité de même sens et montées en parallèle sur l'entrée de l'alimentation de la station intermédiaire et la bobine de relais, la branche transversale étant disposée en les points intermédiaires de la liaison des diodes.

3. Montage selon l'une des revendications 1 ou 2, caractérisé par le fait que dans le cas de la mise en oeuvre de relais moins sensibles, la paire de diodes associées est montée en série avec deux résistances de même valeur, de préférence correspondant à la résistance nécessaire dans la branche transversale.

# FIG 1

# FIG 2

# FIG 3

FIG 4

FIG 5